# EUROPÄISCHE PATENTANMELDUNG

(11) **EP 1 251 644 A1**
(43) Veröffentlichungstag der Anmeldung: **23.10.2002**
(21) Anmeldenummer: 01810378.8
(22) Anmeldetag: 17.04.2001
(51) Int. Cl.: H04B 3/54, H04B 1/74, H04L 1/22

(54) **Hochverfügbares Datenübertragungsverfahren**

(71) Anmelder: ABB RESEARCH LTD., 8050 Zürich (CH)
(72) Erfinder: Dzung, Dacfey, 5430 Wettingen (CH); Kirrmann, Hubert, 5405 Baden (CH)
(74) Vertreter: ABB Patent Attorneys

(57) **Zusammenfassung**

Das Datenübertragungssystem umfasst zwei Datenverarbeitungseinheiten (1, 2) sowie zwei Busleitungen (7, 8). Die Datenverarbeitungseinheiten sind über Schnittstelleneinheiten (4) mit den Busleitungen verbunden. Eine der Busleitungen ist eine Stromleitung (7), wobei zwischen den Schnittstelleneinheiten (4) und der Stromleitung (7) jeweils eine Signalkoppelungsvorrichtung (5) vorgesehen ist.

Mit dem Übertragen des Signals über unterschiedliche Übertragungsmedien wird die Zuverlässigkeit des Verfahrens gesteigert.

## Beschreibung

### Technisches Gebiet

Bei der Erfindung wird ausgegangen von einem Verfahren zum Übertragen von Daten in einem Datenübertragungssystem gemäss dem Oberbegriff des Patentanspruchs 1 sowie von einem Datenübertragunssystem gemäss dem Oberbegriff des Patentanspruchs 6.

### Stand der Technik

Für Datenübertragungsaufgaben in dezentralisierten Automatisierungssystemen werden spezielle Datenübertragungsleitungen, sogenannte Bussysteme, eingesetzt. Über den Bus wird die Kommunikation zwischen verteilt angeordneten Datenverarbeitungseinheiten abgewickelt. Im gesamten Automatisierungssystem kommt dem Bus dabei eine zentrale Bedeutung zu, weshalb eine hohe Verfügbarkeit des Buses vorausgesetzt werden können muss.
Eine solche hohe Verfügbarkeit lässt sich durch eine redundante Ausführung mit zwei Bussen als Übertragungswege erziehlen. Dabei ist bei der Steuerung der redundanten Übertragungswege in einem solchen Datenübertragungssystem darauf zu achten, dass ständig beide Übertragungswege überprüft werden und mit geeigneten Umschaltkriterien fehlerfrei alle Datenübertragungsteilnehmer auf den fehlerfreien Übertragungsweg zugeschaltet werden.
Solche Bussysteme sind bekannt und beispielsweise in EP 0 287 992 ausführlich beschrieben. Dabei werden neben Funktionsprüfung und Steuerung der redundanten Busse insbesondere Methoden zum Empfangen und Auswerten von parallel eingehenden Signalen erläutert.
Werden bestehende Bussysteme mit einem Übertragungsweg nachträglich mit einem zweiten Übertragungsweg erweitert, bedeutet dies in der Regel einen erheblichen Verkabelungsaufwand, im wesentlichen entlang bereits bestehender Leitungen. Diese zusätzlichen Leitungen nehmen viel Platz ein und verursachen Mehrkosten beim Verlegen. Dies führt insbesondere bei Automatisierungssystemen mit begrenzt verfügbarem Platz zu Problemen, beispielsweise in Automobilen, Satelliten, etc.
Da redundante Busse in der Regel unmittelbar nebeneinander geführt werden, sind sie allfälligen elektromagnetischen Störungen gleichermassen ausgesetzt. Dies kann im Extremfall zu einem Ausfall des ganzen Systems führen.

### Kurze Darstellung der Erfindung

Die der Erfindung zugrundeliegende Aufgabe besteht darin, ein hinsichtlich Störungsanfälligkeit verbessertes Verfahren der eingangs genannten Art zum Übertragen von Daten sowie ein dafür verwendetes Datenübertragungssystem zu schaffen.
Die Aufgabe wird mit einem Verfahren mit den Merkmalen des Patentanspruchs 1 sowie mit einem Datenübertragungssystem mit den Merkmalen des Patentanspruchs 6 gelöst.
Beim erfindungsgemässen Verfahren zum Übertragen von Daten in einem Datenübertragungssystem werden die zu übertragende Daten in einer Schnittstelleneinheit einer sendenden Datenverarbeitungseinheit zum Übertragen aufbereitet. Das Signal der aufbereiteten Daten wird anschliessend in mindestens zwei Busleitungen eingespiesen. Zumindest eine der Busleitungen ist dabei eine Stromversorgungsleitung, in welche das Signal mittels einer Signalkoppelungsvorrichtung eingekoppelt wird. Die an beiden Busleitungen anliegenden Signale werden in einer Schnittstelleneinheit einer empfangenden Datenverarbeitungseinheit in die zu übertragenden Daten rückgewandelt, wobei das an der Stromleitung anliegende Signal mittels der Signalkoppelungsvorrichtung entkoppelt wird.
Mit dem Übertragen des Signals über unterschiedliche Übertragungsmedien wird die Zuverlässigkeit des Verfahrens gesteigert. Die Anfälligkeit des Systems gegenüber elektromagnetischen Störungen wird insbesondere dadurch vermindert, indem das Signal neben einer Datenübertragungsleitung zusätzlich über die Stromleitung geführt wird, welche getrennt von den anderen Leitungen geführt und zudem meist abgeschirmt ist.

Das Signal der aufbereiteten Daten wird vorzugsweise synchron in die Busleitungen eingespiesen. Dies ist einfacher handzuhaben und es ergeben sich geringere Übertragungsverzögerungen. Die an den Busleitungen anliegenden Signale werden anschliessend beim Empfangen in der Schnittstelleneinheit miteinander verglichen und entsprechend überlagert.
Um eine verbesserte Redundanz zu erzielen können die Daten mit unterschiedlichen Übertragungskriterien über die Busleitungen übertragen werden. Die verschiedenen Übertragungskriterien ergeben sich aus der bedarfsabhängigen Rückwandlung der Signale über die unterschiedlichen Übertragungsmedien. Eines der an den Busleitungen anliegenden Signale wird beim Empfangen in der Schnittstelleneinheit rückgewandelt, während das andere Signal nur bei Bedarf, beispielsweise bei einem Ausfall oder einer Störung in der entsprechenden Busleitung, in der Schnittstelleneinheit rückgewandelt wird.
Beim erfindungsgemässen Datenübertragungssystem mit mindestens zwei Datenverarbeitungseinheiten, mindestens zwei Busleitungen, und die Datenverarbeitungseinheiten mit den Busleitungen verbindende Schnittstelleneinheiten, ist mindestens eine erste der mindestens zwei Busleitungen eine Stromleitung, wobei zwischen den Schnittstelleneinheiten und der Stromleitung jeweils eine Signalkoppelungsvorrichtung vorgesehen ist.
Die Stromleitung ist in der Regel von anderen Leitungen, insbesondere Datenübertragungsleitungen getrennt geführt, rsp. von diesen abgeschirmt. Dadurch ist das redundante Datenübertragungssystem zusätzlich gegen elektromagnetische Störungen weniger anfällig.
Beim Erweitern bestehender Datenübertragungssystemen mit nur einer Busleitung, kann dank dem erfindungsgemässen Datenübertragungssystem auf das Verlegen einer zusätzlichen Datenübertragungsleitung verzichtet werden, da einfach die in der Regel bereits vorhandene Stromleitung als Busleitung verwendet wird. Der Aufwand für eine solche Erweiterung kann somit relativ gering gehalten werden.
Zudem ergeben sich Vorteile beim Platzbedarf, wenn beispielsweise keine zusätzliche Leitungen in ursprünglich knapp bemessene Kabelschächte eingepasst werden müssen. Dies spielt insbesondere dann eine wichtige Rolle, wenn Platz ohnehin knapp vorhanden ist, beispielsweise für Anwendungen im Automobilbau oder in der Raumfahrt.

### Kurze Beschreibung der Zeichnung

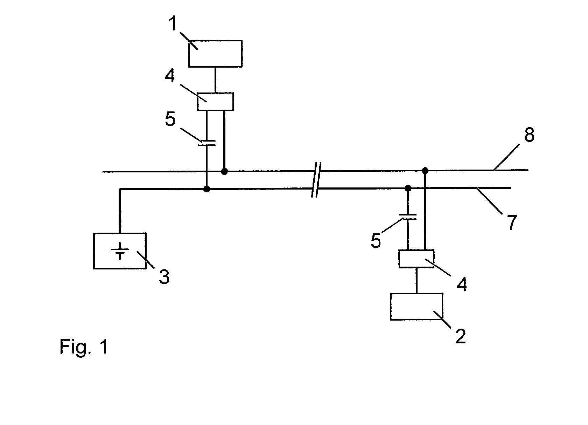

Die Erfindung wird anhand der Zeichnung erläutert, wobei Fig.1 eine schematische Darstellung des erfindungsgemässen Datenübertragungssystems zeigt.

### Weg zur Ausführung der Erfindung

In der Fig. 1 ist ein Datenübertragungssystem dargestellt. Zwei Datenverarbeitungseinheiten 1 und 2 sind im Wesentlichen über zwei Busleitungen 7 und 8 miteinander verbunden.
Zwischen die Datenverarbeitungseinheiten und die Busleitungen sind Schnittstelleneinheiten 4 geschaltet, mit welchen die zu übertragenden Daten in die Busleitungen ein- oder aus den Busleitungen ausgekoppelt werden.
Im erfindungsgemässen Datenübertragungssystem ist die eine der beiden Busleitungen eine reine Datenübertragunsgleitung 8, welche also ausschliesslich dem Übertragen von Daten von einer Datenverarbeitungseinheit zur anderen dient.
Die andere Busleitung erfüllt primär eine andere Aufgabe, nähmlich ein Verbraucher mit Strom aus einer Energiequelle 3 zu versorgen. Es handelt sich somit um eine Stromleitung 7, welche zusätzlich als Busleitung benutzt wird. Dazu umfasst die entsprechende Schnittstelleneinheit 4 zusätzlich eine Signalkoppelungsvorrichtung 5, um das Signal in die Stromleitung 8 einzukoppeln. Entsprechende Vorrichtungen und Verfahren sind bekannt und sind beispielsweise in DE 198 23 234 ausführlich beschrieben.
Im erfindungsgemässen Verfahren werden die zu übertragenden Daten in der Schnittstelleneinheit 4 einer sendenden Datenverarbeitungseinheit 1 aufbereitet. Dabei werden die Daten nach herkömmlichen, aus der digitalen Modulation bekannten Methoden auf eine elektrische Welle aufmoduliert. Diese Welle wird sodann synchron direkt in die Datenübertragungsleitung 8 und via Signalkoppelungsvorrichtung 5 in die Stromleitung 7 eingekoppelt.

Die Schnittstelleneinheit einer empfangenden Datenverarbeitungseinheit 2 verfügt über zwei parallele Eingänge für die zu empfangenden Daten, welche an die Datenübertragungsleitung 8 und via Signalkoppelungsvorrichtung 5 an die Stromleitung 7 gekoppelt sind.
Mit herkömmlichen, aus dem Radiowellen-Empfang bekannten Methoden werden die parallel eingehenden Daten analysiert und verarbeitet.
Da normalerweise die Ausbreitung der Signale in speziell dafür vorgesehenen Datenübertragungsleitungen besser ist als in einer Stromleitung, kann vorgesehen werden, die über die Stromleitung übertragenen Signale lediglich zur Absicherung der über die Datenübertragungsleitung übertragenen Signale zu benutzen. In diesem Fall scheint es vorteilhaft sein, für die beiden unterschiedlichen Datenleitungen verschiedene Übertragungskriterien zu benutzen. Die Verfügbarkeit des Systems wird dank der zweiten Busleitung erhöht, trotz in der Regel wesentlich geringeren Übertragungsbandbreiten.
Besonders langsame und bezüglich Übertragungssicherheit kritische Daten, wie beispielsweise Steuerbefehle, eignen sich bestens für eine Übertragung mit einem solchen System.
Das erfindungsgemässe Datenübertragungssystem erlaubt Redundanz in ein bestehendes Datenübertraagungssystem einzubauen, ohne dabei zusätzliche Leitungen verlegen zu müssen. Die Zuverlässigkeit bestehender Systeme kann somit ohne grossen Aufwand gesteigert werden.
Obwohl bei dem beschriebenen Datenübertragungssystem von zwei Busleitungen ausgegangen worden ist, sind selbstverständlich auch Datenübertragungssysteme denkbar mit drei oder mehr Busleitungen, wobei auch zwei oder mehr dieser Busleitungen als Stromleitung ausgebildet sein können.

### Bezugszeichenliste

- 1, 2: Datenverarbeitungseinheit
- 3: Energiequelle, Batterie
- 4: Schnittstelleneinheit
- 5: Signalkoppelungsvorrichtung
- 7: Stromleitung, Busleitung
- 8: Datenübertragungsleitung, Busleitung

## Patentansprüche

1. Verfahren zum Übertragen von Daten in einem Datenübertragungssystem, welches Datenübertragungssystem im Wesentlichen
- mindestens zwei Datenverarbeitungseinheiten (1, 2),
- mindestens zwei Busleitungen (7, 8), von welchen mindestens eine erste als Stromleitung (7) ausgebildet ist und mindestens eine zweite als Datenübertragungsleitung (8) ausschliesslich zur Datenübertragung vorgesehen ist, sowie
- die Datenverarbeitungseinheiten (1, 2) mit den Busleitungen (7, 8) verbindende Schnittstelleneinheiten (4)
umfasst, wobei
- zwischen den Schnittstelleneinheiten (4) und der mindestens einen Stromleitung (7) jeweils eine Signalkoppelungsvorrichtung (5) vorgesehen ist,
in welchem Verfahren
- zu übertragende Daten in der Schnittstelleneinheit (4) einer sendenden Datenverarbeitungseinheit zum Übertragen aufbereitet werden,
- das Signal der aufbereiteten Daten in die mindestens zwei Busleitungen (7,8) eingespiesen wird, wobei das Signal in die mindestens eine Stromleitung (7) mittels der Signalkoppelungsvorrichtung (5) eingekoppelt wird, und
- die an den Busleitungen (7, 8) anliegenden Signale in der Schnittstelleneinheit (4) einer empfangenden Datenverarbeitungseinheit in die zu übertragenden Daten rückgewandelt werden, wobei das an der Stromleitung (7) anliegende Signal mittels der Signalkoppelungsvorrichtung (5) entkoppelt wird.

2. Verfahren nach Anspruch 1, **dadurch gekennzeichnet, dass**
- das Signal der aufbereiteten Daten beim Senden synchron in die Busleitungen (7, 8) eingespiesen wird.

3. Verfahren nach Anspruch 1, **dadurch gekennzeichnet, dass**
- zum Übertragen der Daten über die Datenübertragungsleitung (8) ein erstes Übertragungskriterium verwendet wird, und dass
- zum Übertragen der Daten über die Stromleitung (7), zumindest ein, vom ersten Übertragunsgprotokoll verschiedenes, zweites Übertragungskriterium verwendet wird.

4. Verfahren nach Anspruch 2, **dadurch gekennzeichnet, dass**
- die an den Busleitungen (7, 8) anliegenden Signale beim Empfangen in der Schnittstelleneinheit (4) überlagert werden.

5. Verfahren nach einem der Ansprüche 1 bis 3, **dadurch gekennzeichnet, dass**
- das an der Datenübertragungsleitung (8) anliegende Signal beim Empfangen in der Schnittstelleneinheit (4) rückgewandelt wird, und dass
- an der Stromleitung (7) anliegende Signal nur bei Bedarf in der Schnittstelleneinheit (4) rückgewandelt wird.

6. Datenübertragungssystem mit
- mindestens zwei Datenverarbeitungseinheiten (1, 2),
- mindestens zwei Busleitungen (7, 8), und
- die Datenverarbeitungseinheiten (1, 2) mit den Busleitungen verbindende Schnittstelleneinheiten (4),
**dadurch gekennzeichnet, dass**
- mindestens eine erste der mindestens zwei Busleitungen eine Stromleitung (7) ist, und dass
- zwischen den Schnittstelleneinheiten (4) und der Stromleitung (7) jeweils eine Signalkoppelungsvorrichtung (5) vorgesehen ist.

7. Datenübertragungssystem nach Anspruch 6, **dadurch gekennzeichnet, dass**
- mindestens eine zweite der mindestens zwei Busleitungen eine Datenübertragungsleitung (8) ist, welche ausschliesslich zur Datenübertragung vorgesehen ist.
